(19) Europäisches Patentamt
European Patent Office
Office européen des brevets

(11) Publication number: **0 283 520 B1**

(12) # EUROPEAN PATENT SPECIFICATION

(45) Date of publication of patent specification: **29.12.93**

(51) Int. Cl.5: **D01F 6/76**, D01F 8/16, D01F 8/10, D06M 11/00, C08J 7/12, C08J 7/14, C08G 75/20

(21) Application number: **87906214.9**

(22) Date of filing: **25.09.87**

(86) International application number: **PCT/JP87/00701**

(87) International publication number: **WO 88/02414 (07.04.88 88/08)**

(54) **POLYPHENYLENE SULFONE FIBERS AND A METHOD FOR THEIR PRODUCTION.**

(30) Priority: **26.09.86 JP 226069/86**
**29.09.86 JP 228357/86**

(43) Date of publication of application:
**28.09.88 Bulletin 88/39**

(45) Publication of the grant of the patent:
**29.12.93 Bulletin 93/52**

(84) Designated Contracting States:
**DE FR GB IT**

(56) References cited:
**GB-A- 1 365 486**
**JP-A- 6 192 828**
**JP-A-59 204 920**
**JP-B- 6 035 370**
**JP-B- 6 044 404**

**Abstract of JP-A- 59 59918 (Patent Abstracts of Japan 8, no. 156) and English translation**

(73) Proprietor: **TORAY INDUSTRIES, INC.**
**2-1, Nihonbashi Muromachi 2-chome**
**Chuo-ku**
**Tokyo 103(JP)**

(72) Inventor: **UMEZAWA, Masao**
**171-32, Kobirai**
**Ritto-cho**
**Kurita-gun Shiga-ken 520-30(JP)**
Inventor: **TSUBOTA, Toshio**
**Miyasho 998**
**Gokasho-cho**
**Kanzaki-gun Shiga-ken 529-14(JP)**
Inventor: **IMAI, Shiro**
**13-1, Hiyoshidai 4-chome**
**Otsu-shi Shiga-ken 520(JP)**

(74) Representative: **Coleiro, Raymond et al**
**MEWBURN ELLIS**
**2 Cursitor Street**
**London EC4A 1BO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

The present invention relates to polyphenylene sulphone fibres having excellent heat resistance and chemical resistance and a method for their production.

As polyarylene sulphone fibres, porous fibres consisting of structural units containing ether bondings in their main chains are known. However, these so-called polyethersulphone fibres containing ether bonds in their main chains dissolve in amide type organic solvents and although their heat resistance and chemical resistance are excellent, this solubility limits their use.

On the other hand, crystalline polyparaphenylene sulphone powder whose melting point is higher than 500 °C and having heat resistance is known, but it is practically impossible to carry out melt-moulding or solution-moulding thereof. There are however some examples of film-forming in JP-A-92828/1985 and JP-A-92829/1985.

Moreover, in Japanese Patent Publication 35370/1984, it is proposed that the surfaces of polyphenylene sulphide fibres are treated with, for example, hydrogen peroxide or sodium hypochlorite to make the fibres infusible. However, fibres obtained by this method are very brittle and have low strength. Moreover, there are defects; cracks often occur and fibrillation occurs on the (treated) surface layers of the fibres.

GB-A-1365486 describes a method of partially or completely oxidizing poly(arylene thioethers) dissolved in sulphuric acid. Partially oxidized polymer which is soluble in sulphuric acid can be solution fabricated into fibres. An example shows a ratio of $-SO_2-$ to -SO of 1 to 1. By dissolution of the oxidant, for example, hydrogen peroxide, peracetic acid or benzoic acid, in the sulphuric acid, premature precipitation of partially oxidized polymer is avoided.

EP-A-0051690 describes the treatment of polyarylene sulphide fibres with an oxidizing agent, for example, hydrogen peroxide to improve high temperature surface hardness.

The present invention provides

(1) polyphenylene sulphone fibres consisting of structural units at least 90 mol % of which are represented by
general formula (I), namely

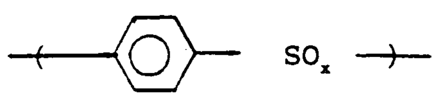

(where x is 0 or 1 or 2) and wherein $\bar{x}$, the average value of x, is from 1.0 to 2.0 inclusive, the molar ratio of

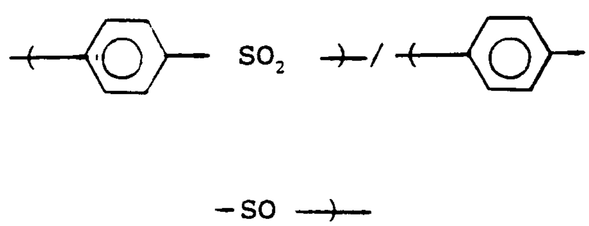

is at least 3 and the degree of orientation of the fibres is not less than 60%;

(2) a method for production of polyphenylene sulphone fibres as defined above which method comprises modifying, by treatment with an organic peroxide, polyphenylene sulphide fibres consisting at least mainly of units of a general formula (II), namely

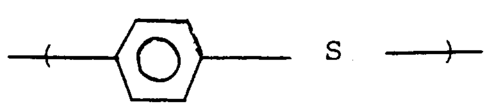 ,

which polyphenylene sulphide fibres have a degree of orientation not less than 60% and may have

(i) a specific surface area larger than 0.4 $m^2/g$, and/or

(ii) a fine crystal size, as observed at $2\theta = 19$ to 21 °, of more than 2nm (20Å) and a fibre period in the axis direction of from 0.95 to 1.05nm (9.5 to 10.5Å) inclusive, to obtain the polyphenylene sulphone

fibres.

At least 90 mole% of the units of the polyphenylene sulphide fibrous starting material have the formula (II), so at least 90% of the units of the polyphenylene sulphone fibrous product have the formula (I).

New fibres having distinctive excellent chemical resistance against acids such as concentrated nitric acid and sulphuric acids and bases such as aqueous sodium hydroxide solutions as well as excellent heat stability at higher temperature than 200 °C can be offered by this constitution.

Methods and fibres embodying the invention will be explained in more detail below.

Referring to the polyphenylene sulphone (hereinafter abbreviated as PPSO) fibres obtainable by method embodying the present invention, these consist at least mainly of the following units

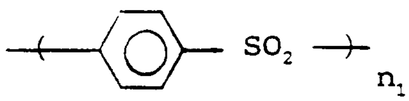 , 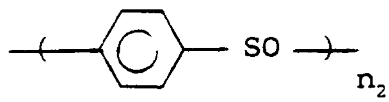

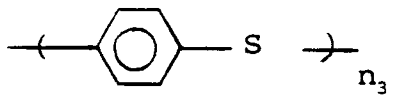

and wherein each of $n_1$, $n_2$ and $n_3$ represents a respective molar ratio, and $n_1 + n_2 + n_3 = 1$

Further, $\bar{x}$ is determined as follows

$$\bar{x} = \frac{2 \times n_1 + 1 \times n_2 + 0 \times n_3}{n_1 + n_2 + n_3} = 2n_1 + n_2$$

When $\bar{x}$ is less than 1.0, distinctive excellent heat resistance cannot be obtained. $\bar{x}$ is preferably more than 1.4. Moreover, the molar ratio of

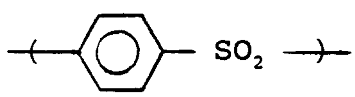

to the total of

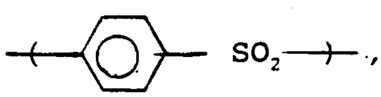 ., 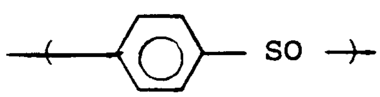

and

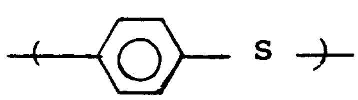

may be more than 0.3, preferably more than 0.5 and more preferably more than 0.7. The ratio of $SO_2$/SO is preferably more than 1.0, more preferably more than 2.0 and especially preferably more than 3.0. Almost perfectly polysulphonated products wherein the oxidized ratio of sulphur atoms in the polymer is more than 0.9 and the ratio of $SO_2$/SO is ≧3 is especially preferable because ultrahigh heat resistance can be obtained. In this case, the formation of a so-called three dimensional structure wherein main chains are partially bonded with, for example, oxygen atoms are obtainable.

The bonds between a benzene ring and sulphur atoms in the main chain are in para or meta position, but the para bonding where higher crystallinity can be obtained is preferable. It is especially preferable that para bondings are more than 90 mole %. If the para bonding is less than 90 mole %, crystallinity and transition temperature of the polymer obtained decrease, namely, heat resistance and chemical resistance deteriorate. On the other hand, in the other bondings of less than 10 mole %, for example, ether bonding, biphenyl bonding, naphthyl bonding, substituted phenyl sulphide bonding can be present.

Hydroxyl group or oxygen atom and so on can be present on some of the benzene rings in the above described structural unit formula.

As to the fine structure of the fibre of the present invention, especially the degree of orientation, it is preferable that the value calculated from the strength distribution obtained by scanning the peak observed at the equatorial line scanning $2\theta$ = 16 to 17° in the circular direction is more than 60%.

If the degree of orientation is less than 60%, fibres of low knot strength and which are brittle are often obtained. More than 80% is preferable and especially, if the value is more than 90%, fibres of high knot strength and heat resistance can be obtained. It is preferable that the fine crystal size, as the size observed at $2\theta$ = 16 to 17°, is more than 2nm (20Å), and more than 3nm (30Å) is more preferable.

If the polysulphide fibres used as starting material have a conventional denier and if only the surface layer is oxidized, the crystallinity of the polymer deteriorates and the size of the crystals becomes small probably due to the formation of a mixture of the various constituent units and thereby only low crystallinity and low strength can be obtained.

The fibre period in the fibre axis direction is preferably 0.95 to 1.05 nm (9.5 to 10.5Å) and more preferably 0.95 to 1 nm (9.5 to 10.0Å). As the long period of the crystalline lamella, more than 10nm (100Å) is preferable.

PPSO fibres can be easily prepared from ultrafine fibres or porous fibres having large surface area. As the ultrafine fibres, less than 0.5 denier (0.55 dtex) for the monofilament denier is preferable and less than 0.1 denier (0.11 dtex) is especially preferable. This is because the finer the fibre diameter, (1) fibres having high strength can be obtained, (2) fibrillation hardly occurs, (3) fibres rich in flexibility (bending resistance) can be obtained, (4) dense and inter-entangled sheet-like products can be obtained, (5) especially when these fibres are used for filters, much smaller dust particles can be removed. As porous fibres or porous films, it is preferable that the specific surface area of the PPSO is more than 0.4 $m^2/g$. More than 2.4 $m^2/g$ is more preferable and more than 10 $m^2/g$ is especially preferable. Fibre-like products (woven, knitted products, non-woven fabrics and so-on) prepared from the porous fibres have (1) a large amount of air within the fibre-like products, so that an excellent heat insulating property can be thereby obtained, or (2) a high porosity, so that an excellent liquid absorbing property for various liquids such as various solutions and electrolytes can be obtained. Here, the specific surface area means the surface area per 1 g of the fibre and can be measured by means of the so-called BET (Brunauer-Emmet-Teller) method.

Next, the method for producing PPSO fibres of the present invention will be explained below.

PPSO fibres of the present invention can be obtained by oxidizing polyphenylene sulphide (hereinafter abbreviated as PPS), more preferably highly oriented PPS, especially preferably highly oriented polyparaphenylene sulphide (hereinafter abbreviated as PPPS) fibres wherein para-bonding is more than 90%, with an organic peracid.

PPS can be obtained for example by reacting an alkali sulphide with a para-dihalogenated benzene in a polar solvent under high temperature and high pressure. It is especially preferable that sodium sulphide is reacted with para-dichlorobenzene in an amide type polar solvent having a high boiling point such as N-methyl-pyrrolidone.

As for the methods for producing ultrafine fibres suitable for the method of the present invention, previously known methods such as meltblowing, superdrawing, removing a sea component from islands-in-a-sea type composite fibres or blend spun fibres, and making peel-off type composite fibres ultrafine by means of a physical or chemical treatment can be used and no special limitation exists. When ultrafine fibre producing type fibres such as islands-in-a-sea type composite fibres and so on are used, polymer substances having fibre formability such as polystyrene, polyethylene, polypropylene, polyethylene terephthalate and polyamide can be used without any limitation as to the binding component or the component removed by dissolution of the fibres, but polymers having high melting point and being hardly thermally-decomposed are preferable because PPS has a high melting point of about 280°C. For ease of spinning and removing solvent, copolymerized polyethylene terephthalates which are easily dissolvable in alkali solution are preferable. By the way, although the spinning temperature of PPS is high, polystyrene type polymers can be co-melt-extruded with PPS. It is surprising that PPS can depress thermal decomposition of polystyrene type polymers, especially thermal decomposition in the molten state and polystyrene type polymers prevent occurrence of finer filaments and nozzle blocking by PPS. This behaviour occurs not only with polystyrene alone but with styrene copolymers. Copolymers of styrene with a higher alcohol ester of acrylic acid and/or a higher alcohol ester of methacrylic acid are preferable and those polymers of higher viscosity are more preferable among them. Moreover, for example, acrylonitrile-butadiene-styrene copolymers (ABS), acrylonitrile-styrene copolymers (AS), butadiene/styrene copolymers (BS) and halogenated polystyrene also show the same effect. Hereinafter these polymers are generally called PST.

Undrawn fibres thus obtained are then drawn and heat-treated, and preferably highly oriented. As the drawing ratio, drawing to more than 2 times is preferable when the taking-up is carried out at the ordinary spinning speed (300 to 1,500 m/min) and it is desirable that drawing to more than 2.5 times, more preferably more than 3 times is carried out. By doing so, PPS fibres whose degree of orientation is more than 60% can be obtained. It is also possible to carry out the spinning at a speed higher than 4,000 m/min to highly orient the fibres. It is surprising that co-melt-extrusion with another polymer gives better formability than the single spinning of PPS. The reason is not certain but such troubles as occurrence of finer filaments and nozzle blocking decrease when molten PPS does not directly contact the nozzle.

Ultrafine fibre producing type fibres obtained are converted into the state of ultrafine fibres by using an appropriate solvent. Of course, a sheet consisting of ultrafine fibres can be obtained by solvent treatment after fibrous sheet-like materials such as woven fabrics, knitted fabrics and non-woven fabrics are formed by using these fibres. By doing so, ultrafine highly oriented PPS fibres can be obtained.

As the methods for producing porous fibres which are more preferable examples of the present invention, conventional well-known technologies can be widely applied. Namely, the method wherein the island component is removed from the islands-in-a-sea type fibres whose sea component is PPS and the method for producing the fibres by a dry, wet or dry-wet coagulation spinning of PPS solution can be used. Moreover, making the fibres porous can be achieved by drawing the fibres at a temperature below the glass transition temperature. In the case of wet or dry spinning, because PPS is hardly dissolved at lower temperature and therefore it is necessary to heat the spinning solution above 200 °C, wet or dry spinning is not a preferable method. On the other hand, when porous fibres are prepared from islands-in-a-sea type fibres, as the island component or the component removable by dissolution, polymeric substances having fibre formability and being durable at the melt spinning temperature of PPS such as polystyrene, polyethylene, polypropylene, polyethylene terephthalate and polyamide can be used without any limitation in the same way as the case of producing ultrafine fibres. For ease of spinning and removing solvent, polystyrene, copolymerized polyethylene terephthalate being easily dissolvable in alkali solution and copolymers of styrene with a high alcohol ester of acrylic acid and/or a higher alcohol ester of methacrylic acid are preferable and those polymers of high viscosity are more preferable among them.

Porous fibre forming type fibres thus obtained are converted into the porous state by using an appropriate solvent. Of course, sheet-like products consisting of porous fibres can be obtained by solvent treatment after fibrous sheet-like materials such as filters and non-woven fabrics are formed.

Thereafter, polysulphone fibres embodying the present invention can be obtained by reacting PPS ultrafine fibres or porous fibres with an oxidizing reagent described below to convert PPS into PPSO.

As the oxidizing reagents used in methods embodying the present invention, oxidizing agents used for ordinary oxidation of chemicals can be used (but sulphuric acid and nitric acid are excluded) and peracetic acid, perbenzoic acid, performic acid, perpropionic acid, perbutylic acid, m-chloro-perbenzoic acid, pertrichloroacetic acid, pertrifluoroacetic acid and perphthalic acid are preferable among them. The treatment conditions for application of the oxidizing reagents depend on the denier of the ultrafine fibres, the specific surface area of the porous fibres, the reaction velocity of the reagents and so-on and therefore are not generally specified. In the case of peracetic acid for ultrafine fibres of less than 0.5 denier and porous fibres and porous films of more than 0.4 $m^2/g$, high rates of making PPSO can be achieved even at room temperature. Moreover, these organic peracids are explosive chemicals and therefore, ultrafine fibres and porous fibres and films, the use of which enables such a high rate of producing PPSO to be easily achieved, are especially preferable. Organic peracids can be prepared by oxidation in an aldehyde in the presence of a catalyst (for example, AMP method for peracetic acid), a vapour phase partial oxidation method, a synthesis using hydrogen peroxide and carboxylic acid anhydride or chloride and reaction of diaroyl peroxide with sodium methoxide.

It is preferable that the PPS fibres consist of polyparaphenylene sulphide (hereinafter abbreviated as PPPS) and especially preferable that more than 95% thereof consists of PPPS. If it is less than 90 mole %, crystallinity, transition temperature and so-on of the polymers obtained decrease and it is therefore difficult to obtain fibres having excellent heat resistance and chemical resistance. In the other components of less than 10 mole % besides the above described main component of 90 mole %, ether, biphenyl, naphthyl and substituted phenyl sulphide bondings can, for example, be present. Moreover, cross-linking can be partly present.

As the fine structure of the PPS fibre used as starting material in a method of the present invention, especially the degree of orientation, it is preferable that the value calculated from the strength distribution obtained by scanning the peak observed at the equatorial line scanning $2\theta = 19$ to $21°$ in the circular direction be more than 60%. If the degree of orientation be less than 60%, fibers of low knot strength and being brittle are often obtained. The degree of orientation is more preferably more than 80% and especially,

if the value be more than 90% and the fibres are highly oriented, fibres having high strength and excellent heat resistance can be obtained.

Moreover, it is preferable that the size of fine crystals, as the size observed at $2\theta = 19$ to $21°$, is more than 2nm (20Å).

On the other hand, the fibre period of the crystals in the fibre axis direction is preferably 1 to 1.1nm (10 to 11Å). PPS having such a fine structure has high strength, excellent heat resistance and excellent chemical resistance.

There is a merit that if the denier of PPS fibres is less than 0.5 denier, oxidation reaction easily occurs and oxidation can be carried out in a short time. Moreover, the degree of orientation of PPSO fibres becomes very high and the physical properties of PPSO fibres thereby can become very good. For example, the degree of orientation can be improved by more than 10% by converting an ultrafine PPS to PPSO. There is even another large merit that colouring of PPS fibres themselves can be reduced because ultrafine fibres can disperse the light.

Moreover, PPS ultrafine fibres have such characteristics that (1) they have high strength, (2) fibrillation hardly occurs, (3) fibres are high in flexibility (bending resistance), (4) dense and inter-entangled sheet-like products can be obtained, and (5) they are especially durable against high pH.

Moreover, fibre-like products (woven, knitted products, non-woven fabrics and so-on) prepared from such fibres bring such effects that the amount of air layer kept in these fibre-like products increases and excellent heat insulating property can be thereby obtained and that as the porosity is high, an excellent liquid retaining property for various liquids such as various solvents and electrolytes can be obtained.

Because these effects are exhibited to a greater extent as the denier of the fibres become finer, it is preferable that the PPS fibres are finer and less than 0.3 denier (hereinafter abbreviated as d) (0.33 dtex) is especially preferable, and less than 0.1 d (0.11 dtex) is more especially preferable.

Moreover, as described above, PPS also has the effect of improving the heat resistance of PST. The effect largely depends upon the kinds, compositions, applications and processing conditions of PST to be used. Although the amount of PPS to be added is not generally determined, it is necessary to determine the amount to be added by testing it properly in advance.

However, in general, based on 100 weight parts of polystyrene component in PST, more than 0.01 weight parts (hereinafter called "parts" unless otherwise described) of PPS are preferable, more than 0.5 parts are more preferable and more than 3 parts are especially preferable. If the amount of PPS to be added is less than 0.01 parts, the thermal decomposition resistance of PST is little improved. When mixing PST with PPS is carried out in powder form, it is enough to add more than 0.5 parts of PPS because both components can be very easily mixed together. But either when both components are in the form of chips or when only PPS is in powder form and PST is in the form of chips, a problem arises in that mixing is not smoothly effected and more than 3 parts of the amount to be added are therefore preferable.

The present invention will be hereinafter described in more detail with reference to the examples.

Example 1

50 parts of PPPS prepared by reacting sodium with para-dichlorobenzene in N-methyl-2-pyrrolidone in the presence of sodium benzoate under high temperature and high pressure and whose apparent viscosity was 3,700 poises (370 Pa.s) at 300°C as the island component and 50 parts of polystyrene of high viscosity as the sea component were used for preparing islands-in-a-sea type composite fibres having 36 island components in a filament under such spinning conditions that the spinning temperature and the take-up velocity were 320°C and 900 m/minute respectively. The spun filaments were thereafter drawn by 3.7 times to obtain filaments of 72 deniers (79 dtex)/24 filaments. The filaments were cut to 10 cm in length and polystyrene as the sea component was extracted and removed in trichloroethylene, and the fibres were then dried. PPPS ultrafine fibres obtained whose monofilament denier was 0.04 denier (0.044 dtex) have tensile strength of 0.041 N/dtex (3.8 g/d) and elongation of 29.2%. The degree of orientation of the fibres calculated from X-ray measurement was 80% and the size of crystals at 20.2° and the fibre period were 2.7 and 1.03nm (27 and 10.3Å) respectively.

The ultrafine fibres were treated in a peracetic acid solution (9% concentration in acetic acid) at room temperature for one hour and thereafter washed, neutralized, washed and dried. The ultrafine fibres thus obtained showed a weight increase of 26% and the monofilament denier was 0.05 denier (0.055 dtex). Tensile strength, elongation and knot strength of the fibres were 0.033 N/dtex (3.1 g/d), 22% and 0.024 N/dtex (2.2 g/d) respectively.

The fibres were immersed overnight in concentrated nitric acid solution whose specific gravity was 1.42 and the degree of tenacity retention was measured after taking them out. It was found that the degree of

tenacity retention for the fibres was 95%, which was very high. As to heat resistance, the degree of tenacity retention after exposure in air at a high temperature such as 300°C for 24 hours was 100%; an excellent result.

The fibres were analyzed by means of solid state high resolution NMR and ESCA (Electron Spectroscopy for Chemical Analysis) and it was found that the structural units of the fibres consisted of 83 mole % of

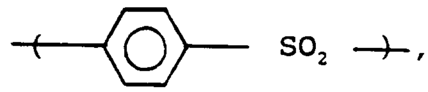

13 mole % of

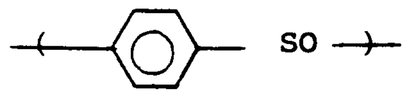

and 4 mole % of

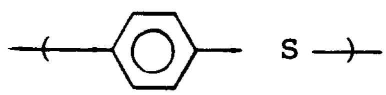

and the degree of orientation at $2\theta = 16.3°$ determined by means of wide angle X-ray diffraction was 91%.

Example 2

Mutually arranged polymeric fibres having seven island components in a filament and moreover a number of ultrafine fibre components in each island component and consisting of 35 parts of PPPS which is the same as in Example 1 as the ultrafine fibre component and 65 parts of a copolymer of acrylic acid and styrene as the binding component were spun at 1,200 m/minute, drawn by 3.5 times and crimped. Thus, staple fibres of mutually arranged polymeric fibres whose fibre length and denier were 51 mm and 4.0 denier (4.4 dtex) respectively were obtained. The average denier of the ultrafine fibre components was 0.002 denier (0.0022 dtex).

A web was prepared by treating the staple fibres with a carding and a crosswrapper and then needle-punching to prepare a non-woven fabric whose weight and apparent density were 200 $g/m^2$ and 0.17 $g/cm^2$ respectively. Thereafter, high speed liquid jets were directed at both sides of the non-woven fabrics under a pressure of 100 $kg/m^2$ through nozzles arranged in a line in a pitch of 1.5 mm whose hole diameters were 0.20 mm while the nozzles were vibrated to densely inter-entangle the fibres. Thereafter, mutually arranged polymeric fibres were wholly converted to ultrafine fibres by almost completely extracting the above described copolymer component in trichloroethylene.

Next, an oxidizing treatment of the fibres was carried out in the same way as Example 1. The non-woven fabrics obtained had a fibre structure where ultrafine fibres of polyphenylene sulphone densely entangled each other. The degree of oxidation was 95% as measured by means of ESCA measurement. The degree of orientation was measured using a sample prepared by bundling drawn filaments before crimping, cutting them to 10 cm and removing the sea component and by means of X-ray analysis. The value was 90% and it was therefore confirmed that the fibres were highly oriented. The resulting sheet had an effective dimensional stability although no binder existed between fibres. Moreover after keeping the fabrics in air at a temperature as high as 290°C for 24 hours, almost no colouring was observed and sufficient tenacity was maintained.

Example 3

Islands-in-a-sea type composite fibres consisting of 50 parts of the same PPPS as in Example 1 as the sea component and 50 parts of polystyrene of high viscosity as the island component and having 36 islands in a filament were spun at a spinning temperature of 320°C and a take-up velocity of 900 m/minute and thereafter the yarn was drawn by 3.7 times at 100°C and heat-set at 220°C to obtain a filament yarn of 72

denier (7.9 dtex)/24 filaments. The filament yarns were cut to 5 cm in length and polystyrene of the island component was extracted and removed in trichloroethylene and the resultant fibres were dried. PPPS porous hollow fibres thus obtained whose specific surface area was 1.6 $m^2/g$ were treated in a peracetic acid solution (the concentration was 9% in acetic acid) for 3 hours, washed, neutralized, washed and dried.

The weight of the porous hollow fibres thus obtained increased by 29% and the specific surface area was 1.24 $m^2/g$.

The fibres did not fall into pieces any more in a concentrated nitric acid solution.

The degree of oxidation of the fibres was analyzed by means of ESCA and was found 98%.

Example 4

60 parts of PPPS being the same as in Example 1 and 30 parts of polystyrene of high viscosity were melted and blended at 320°C and were extruded from a nozzle having 100 holes, spun at a take-up velocity of 900 m/minute, drawn by 3.5 times at 100°C and heat-set at 220°C to obtain composite fibres whose monofilament denier was 3 d (3.3 dtex). The fibres were thereafter cut to 51 mm in length and a web was formed thereof by means of a carding machine. A non-woven fabric whose weight was 500 $g/m^2$ was obtained by needle-punching the web.

The non-woven fabric thus obtained was thereafter immersed in trichloroethylene and polystyrene was thereby almost completely extracted and removed. Thereafter, the non-woven fabric was treated with 9% peracetic acid in acetic acid solution at 50°C for 1 hour and, washed, neutralized, washed and dried.

The non-woven sheet thus obtained was a sheet consisting of porous fibres mainly consisting of PPSO (whose degree of oxidation was 95% measured by ESCA) and whose specific surface area was 16 $m^2/g$. The non-woven sheet had excellent warming property, did not melt and fuse at a temperature as high as 300°C and had excellent heat resistance.

Example 5

PPPS pellets being the same as those of Example 1 were spun at a spinning temperature and take-up velocity of 330°C and 450 m/minute respectively. The filaments obtained were thereafter drawn by 4.0 times under drawing conditions such that the hot roller temperature and the hot plate temperature were 90 and 200°C respectively to obtain filaments of 75 denier (82.5 dtex)/24 filaments. Tensile strength of PPPS fibres obtained was 0.038 N/dtex (3.5 g/d).

Next, these ultrafine fibres were treated in a commercially available peracetic acid solution (9% concentration in acetic acid) at room temperature (30°C) for 2 weeks and thereafter washed, neutralized, washed and dried. The ultrafine fibres thus obtained showed a weight increase of 24% in comparison with the original PPS fibres and the tensile strength and the breaking strength were 0.028 N/dtex (2.6 g/d) and 18% respectively. The fibres were kept in air at a temperature as high as 290°C for 24 hours and the tensile strength and elongation of the fibres before and after the test were measured. No change was observed in the strength-elongation characteristics, which meant that the fibres had very excellent heat resistance.

The fibres were analyzed by means of solid state high resolution NMR and ESCA and it was found that the structural units of the fibres consisted of 75 mole % of

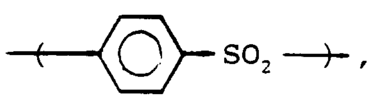

16 mole % of

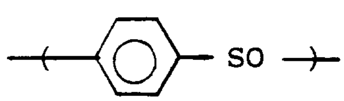

and 9 mole % of

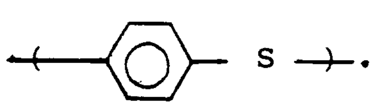

It was also found that the degree of orientation at $2\theta = 16.5°$ determined by means of wide angle X-ray diffraction was 91.3% and the size of fine crystals in this direction was 3.5nm (35Å). It was thereby confirmed that the fibres had a highly oriented crystalline structure.

Comparative Examples 1 and 2.

Instead of the treatment with peracetic acid in Example 5, treatments in sodium hypochlorite 9% solution (1 mole of $H_2SO_4$ was present per 2 mole of NaOC1) at room temperature for one day (comparative Example 1) and at 90°C for one hour (comparative Example 2) were carried out. The fibres obtained in comparative Example 1 showed a weight increase of 4%, while the fibres in comparative Example 2 fell in pieces during the treatment and changed to pieces having no fibrous shape any more.

The fibres obtained in comparative Example 1 were placed on a slide glass and heated from the bottom with the fire of an alcohol lamp, but they did not melt any more even when the surface temperature was raised to 500°C and it was thereby confirmed that the fibre surface had been infusible. However, the fibre strength of the fibre obtained in comparative Example 1 decreased to 1.57 x 108 N/$m^2$ (16 kg/$mm^2$), 36% of the original strength, by the treatment with sodium hypochlorite and the breaking elongation was only 3%. This meant that the fibres had been changed to very brittle fibres. The degree of heat resistant tenacity retention measured in the same way as Example 1 was 32%, which was very low.

The fibres of comparative Example 1 were analyzed by means of NMR, ESCA, IR and it was found that besides 60 mole % of the original structural unit

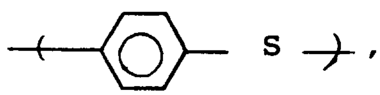

7 mole %

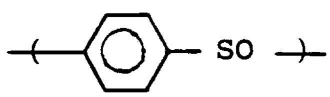

and 15 mole % of

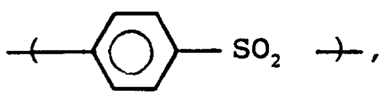

a total 19 mole % of $SO_4^-$- and $SO_3^-$ had been prepared and the ratio of sulphur atoms to carbon atoms decreased from 0.27 to 0.18. It was thereby confirmed that a fairly large amount of main chain cleavage occurred.

Reference Example 1

PPPS being the same as that in Example 1 and polystyrene (Type 679 manufactured by Asahi Chemical Industries Co., Ltd.) were separately melted and then joined together in a spinning nozzle pack to obtain composite fibres whose sheath and core were PST and PPPS respectively. The preparing conditions were as follows.

(1) Sheath component/core component (weight ratio) = 60/40
(2) Melter temperature of PST = 280°C
(3) Melter temperature of PPPS = 315°C
(4) Temperature of the spinning nozzle pack part where PST and PPPS were joined together = 315°C
(5) Spinning velocity = 1,000 m/minute
(6) Drawing ratio = 3.2 times
(7) Drawing temperature = 95°C
(8) Denier X numbers of the fibres obtained = 150 denier (165 dtex) x 50 filaments

Both spinning and drawing could be smoothly carried out without any special trouble. By treating the drawing filaments with trichlene, good PPPS fibres whose strength, elongation and degree of orientation measured by means of X-ray were 0.043 N/dtex (4 g/d), 30% and 89% respectively were obtained. It was

surprising that less filament cutting occurred and better spinning could be carried out in composite spinning of PST and PPPS in comparison with the spinning of PPPS alone. Namely, the numbers of filaments cut (in spinning and drawing together) were 3 times/t in the case of PPPS alone and 0.7 times/t in the case of PST and PPPS composite fibres.

Reference Example 2

3 parts of fine powder of PPS manufactured by Phillips Petroleum Co., Ltd. in U.S.A. were added to and mixed with 100 parts of polystyrene (Type 679 manufactured by Asahi Chemical Co., Ltd.) and the mixture was placed into a Petri dish and stirred at 300 °C to prepare a mixture of PST and PPS. The mixture was heated in air at 330 °C for one hour to carry out a thermal decomposition test and it was found that the degree of weight decrease was 7.1%. The amount of decomposed gas generated by mixing at 300 °C was very little by observation with naked eyes.

The same test was carried out on the composition without PPS in the same manner and it was found that the degree of weight decrease of PST was 18.7%. Moreover, when only PST was stirred at 300 °C, a large amount of decomposed gas occurred. An extremely large amount of decomposed gas occurred at 330 °C and it was feared that even ignition might occur.

Polyphenylene sulphone fibres of the present invention do not deteriorate with concentrated sulphuric acid and nitric acid and have excellent heat resistance and chemical resistance.

Therefore, they can be favourably applied for filters for refining concentrated sulphuric acid and nitric acid for which demands have been recently growing, various filters for desulphuration and denitration apparatus of chimney gas, and filters, sheet-like materials and so-on used in the fields where excellent heat resistance and chemical resistance are required, for example battery separators and fused membranes.

## Claims

1. Polyphenylene sulphone fibres consisting of structural units at least 90 mole % of which are represented by the general formula

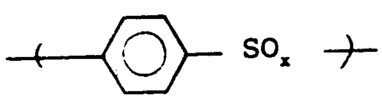

wherein x is 0, 1 or 2 and $\bar{x}$, the average value of x, is from 1.0 to 2.0 inclusive, the said average value $\bar{x}$ of x being given by the formula $2n_1 + n_2$ for respective mole fractions of $n_1$ for

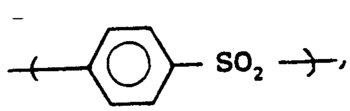

$n_2$ for

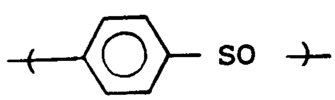

and $n_3$ for

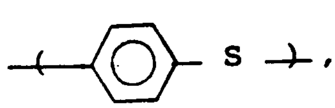

the sum of $n_1 + n_2 + n_3$ being equal to 1, characterized in that the molar ratio of

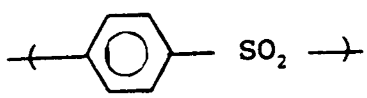 / 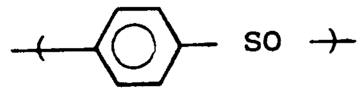

is at least 3 and the degree of orientation of the fibres is not less than 60%.

**2.** Polyphenylene sulphone fibres according to claim 1, wherein the molar ratio of

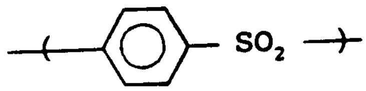

to total of

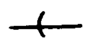

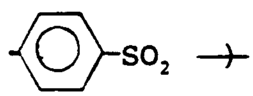, 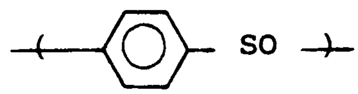

and

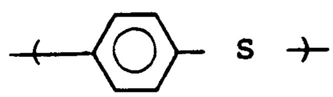

is more than 0.3.

**3.** Polyphenylene sulphone fibres according to claim 1 wherein $\bar{x}$ is 1.4 to 2.0.

**4.** Polyphenylene sulphone fibres according to any preceding claim, wherein the fine crystal size, as observed at $2\theta$ = 16 to 17° is more than 2nm (20Å) and a fibre period in the fibre axis direction is 0.95 to 1.05nm (9.5 to 10.5Å) inclusive.

**5.** Polyphenylene sulphone fibres according to any preceding claim having a specific surface area more than 0.4 $m^2/g$.

**6.** Polyphenylene sulphone fibres according to claim 1, 2 or 3, wherein the fibres are porous.

**7.** A method for producing polyphenylene sulphone fibres as defined in claim 1, which method comprises modifying polyphenylene sulphide fibres having a degree of orientation of not less than 60% and at least 90mole% of the units of which have the formula

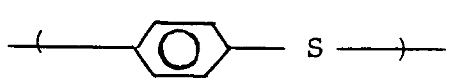

by treatment with an organic peroxide.

**8.** A method according to claim 7, wherein the polyphenylene sulphide fibres have a specific surface area of more than 0.4 $m^2/g$.

**9.** A method according to claim 7, wherein the polyphenylene sulphide fibres have a fine crystal size, as observed at $2\theta$ = 19 to 21°, of more than 2nm (20Å) and a fibre period in the axis direction of from 1 to

1.1nm (10-11Å) inclusive.

**10.** A method according to any one of claims 7 to 9, wherein the organic peroxide is at least one peroxy acid selected from peracetic acid, perbenzoic acid, performic acid, perpropionic acid, perbutyric acid, m-chloroperbenzoic acid, pertrichloroacetic acid, pertrifluoroacetic acid and perphthalic acid.

**11.** A method according to any one of claims 7 to 10, wherein the polyphenylene sulphide fibres have been prepared by co-melt-extruding polyphenylene sulphide polymer as an island component and polystyrene polymer as a sea component, and carrying out, in combination, a drawing process and a process for removing the sea component.

**12.** A method according to any one of claims 7 to 11, wherein the poly-p-phenylene sulphide fibres are ultrafine fibres having a denier of less than 0.5 (0.55 dtex).

**Patentansprüche**

**1.** Polyphenylensulfonfasern, die aus Struktureinheiten bestehen, wovon wenigstens 90 Mol.-% durch die allgemeine Formel

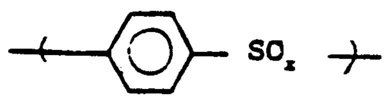

dargestellt sind, worin x für 0,1, oder 2 steht und $\bar{x}$, der Durchschnittswert von x, 1,0 bis einschließlich 2,0 beträgt, wobei der genannte Durchschnittswert $\bar{x}$ von x durch die Formel $2n_1 + n_2$ für jeweilige Molanteile von $n_1$ für

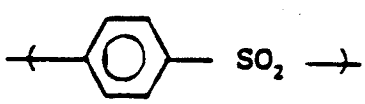

,

$n_2$ für

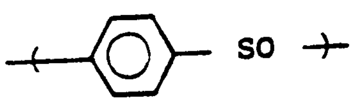

und $n_3$ für

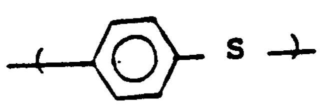

gegeben ist und die Summe von $n_1 + n_2 + n_3$ gleich 1 ist, dadurch gekennzeichnet, daß das Molverhältnis

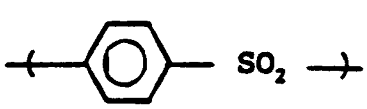 / 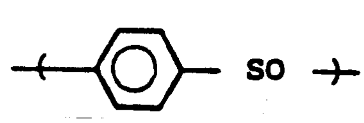

wenigstens 3 beträgt und der Grad der Orientierung der Fasern nicht weniger als 60 % beträgt.

2. Polyphenylensulfonfasern nach Anspruch 1, worin das Molverhältnis von

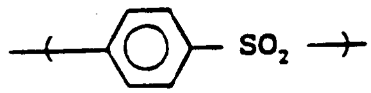

zur Gesamtsumme von

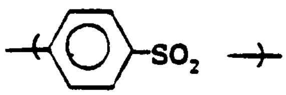,
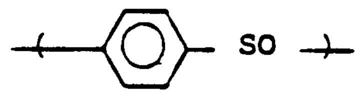

und

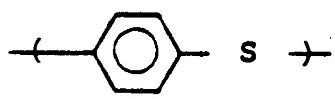

mehr als 0,3 beträgt.

3. Polyphenylensulfonfasern nach Anspruch 1, worin $\bar{x}$ 1,4 bis 2,0 ist.

4. Polyphenylensulfonfasern nach einem der vorhergehenden Ansprüche, worin die Feinkristallgröße, beobachtet bei $2\theta$ = 16 - 17°, mehr als 2 nm (20 Å) beträgt und eine Faserperiode in der Faserachsenrichtung 0,95 bis 1,05 nm (9,5 bis 10,5 Å) einschließlich umfaßt.

5. Polyphenylensulfonfasern nach einem der vorhergehenden Ansprüche, die einen spezifischen Oberflächenbereich von mehr als 0,4 $m^2/g$ aufweisen.

6. Polyphenylensulfonfasern nach Anspruch 1, 2 oder 3, worin die Fasern porös sind.

7. Verfahren zur Herstellung von Polyphenylensulfonfasern nach Anspruch 1, welches Verfahren das Modifizieren von Polyphenylensulfidfasern mit einem Orientierungsgrad von nicht weniger als 60 % und wenigstens 90 Mol.-% der Einheiten der Formel

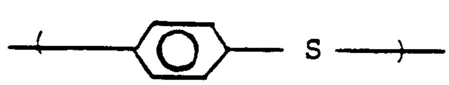

durch Behandlung mit einem organischen Peroxid umfaßt.

8. Verfahren nach Anspruch 7, worin die Polyphenylensulfidfasern einen spezifischen Oberflächenbereich von mehr als 0,4 $m^2/g$ aufweisen.

9. Verfahren nach Anspruch 7, worin die Polyphenylensulfidfasern eine Feinkristallgröße, beobachtet bei $2\theta$ = 19 - 21°, von mehr als 2 nm (20 Å) und eine Faserperiode in Achsenrichtung von 1 bis 1,1 nm (10 - 11 Å) einschließlich aufweisen.

10. Verfahren nach einem der Ansprüche 7 bis 9, worin das organische Peroxid wenigstens eine Peroxysäure ist, die aus Peressigsäure, Perbenzoesäure, Perameisensäure, Perpropionsäure, Perbuttersäure, m-Chlorperbenzoesäure, Pertrichloressigsäure, Pertrifluoressigsäure und Perphthalsäure ausgewählt ist.

11. Verfahren nach einem der Ansprüche 7 bis 10, worin die Polyphenylensulfidfasern durch Koschmelzextrudieren von Polyphenylensulfidpolymer als Inselbestandteil und Polystyrolpolymer als Meerbestandteil

und durch Durchführen in Kombination damit eines Zieh- bzw. Reckverfahrens und eines Verfahrens zur Entfernung des Meerbestandteils hergestellt wurden.

**12.** Verfahren nach einem der Ansprüche 7 bis 11, worin die Poly-p-phenylensulfidfasern ultrafeine Fasern mit einer Denierzahl von weniger als 0,5 (0,55 dtex) sind.

**Revendications**

**1.** Fibres de polyphénylène sulfone consistant d'unités structurelles d'au moins 90% en moles de celles qui sont représentées par la formule générale

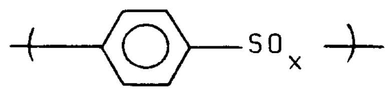

dans laquelle x est 0, 1 ou 2 et $\bar{x}$, la valeur moyenne de x, est entre 1,0 et 2,0 inclus, ladite valeur moyenne $\bar{x}$ de x étant donnée par la formule $2n_1 + n_2$ pour des fractions molaires respectives de $n_1$ , pour

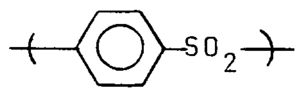 ,

$n_2$ pour

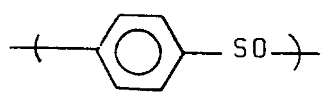

et $n_3$ pour

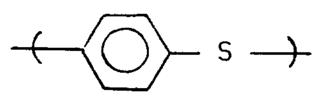

la somme de $n_1 + n_2 + n_3$ étant égale à 1, caractérisées en ce que le rapport molaire de

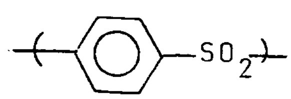 / 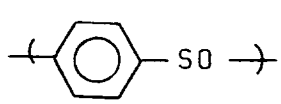

est au moins de 3 et le degré d'orientation des fibres n'est pas inférieur à 60%.

**2.** Fibres en polyphénylène sulfone selon la revendication 1, dans lesquelles le rapport molaire de

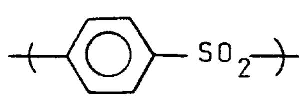

à un total de

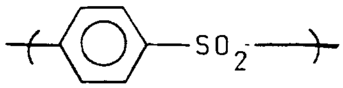 ,

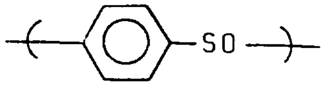

et

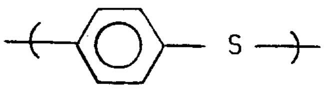

est supérieur à 0,3.

3. Fibres de polyphénylène sulfone selon la revendication 1, dans lesquelles $\bar{x}$ est entre 1,4 et 2,0

4. Fibres de polyphénylène sulfone selon l'une quelconque des revendications précédentes, dans lesquelles la taille fine de cristal, comme observée à $2\theta$ = 16 à 17° est supérieure à 2 nm (20Å) et une période de fibre dans la direction de l'axe de la fibre est égale à 0,95 à 1,05 nm (9,5 à 10,5 Å) inclus.

5. Fibres de polyphénylène sulfone selon l'une des revendications précédentes ayant une surface spécifique supérieure à 0,4 $m^2$/g.

6. Fibres de polyphénylène sulfone selon la revendication 1, 2 ou 3, dans lesquelles les fibres sont poreuses.

7. Procédé pour la production de fibres de polyphénylène sulfone comme définies en revendication 1, lequel procédé comprend la modification de fibres de sulfure de polyphénylène ayant un degré d'orientation de pas moins de 60% et d'au moins 90% en moles des unités de formule

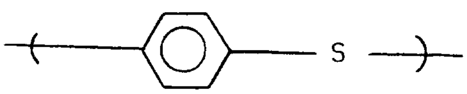

par traitement avec un peroxyde organique.

8. Procédé selon la revendication 7, dans lequel les fibres de sulfure de polyphénylène ont une surface spécifique supérieure à 0,4 $m^2$/g.

9. Procédé selon la revendication 7, dans lequel les fibres de sulfure de polyphénylène ont une taille fine de cristal, comme observée à $2\theta$ = 19 à 21°, supérieure à 2 nm (20 Å) et une période de fibre dans la direction de l'axe entre 1 et 1,1 nm (10-11Å) inclus.

10. Procédé selon l'une quelconque des revendications 7 à 9, dans lequel le peroxyde organique est au moins un acide peroxy sélectionné parmi l'acide peracétique, acide perbenzoïque, acide performique, acide perproprionique, acide perbutyrique, acide m-chloroperbenzoïque, acide pertrichloroacétique, acide pertrifluoroacétique et acide perphtalique.

11. Procédé selon l'une quelconque des revendications 7 à 10, dans lequel les fibres de sulfure de polyphénylène ont été préparées par cofusion-extrusion d'un polymère de sulfure de polyphénylène en tant que composé île et un polymère de polystyrène en tant que composé mer et par la mise en oeuvre, en combinaison, d'un procédé d'étirage et d'un procédé pour éliminer le composant mer.

**12.** Procédé selon l'une quelconque des revendications 7 à 11, dans lequel les fibres de sulfure de poly-p-phénylène sont des fibres ultrafines ayant un denier de moins de 0,5 (0,55 dtex).